# EUROPÄISCHE PATENTANMELDUNG

(11) **EP 2 042 560 A1**
(43) Veröffentlichungstag der Anmeldung: **01.04.2009**
(21) Anmeldenummer: 07116701.9
(22) Anmeldetag: 19.09.2007
(51) Int. Cl.: C08L 97/02, B27N 3/00

(54) **Leichte Holzwerkstoffe mit guten mechanischen Eigenschaften und geringer Formaldehyd-Emission**

(71) Anmelder: BASF SE, 67056 Ludwigshafen (DE)
(72) Erfinder: Weinkötz, Dr. Stephan, 67434 Neustadt (DE); Finkenauer, Michael, 67593 Westhofen (DE); Schmidt, Michael, 67346 Speyer (DE); Peretolchin, Dr. Maxim, 68161 Mannheim (DE)

(57) **Zusammenfassung**

Leichter holzhaltiger Stoff mit einer mittleren Dichte im Bereich von 200 bis 600 kg/m³, enthaltend, jeweils bezogen auf den holzhaltigen Stoff:
A) 30 bis 95 Gew.-% Holzpartikel;
B) 1 bis 15 Gew.-% eines Füllstoffs mit der Schüttdichte im Bereich von 10 bis 100 kg/m³, ausgewählt aus der Gruppe bestehend aus verschäumbaren Kunststoffteilchen und bereits verschäumten Kunststoffteilchen;
C) 3 bis 50 Gew.-% eines Bindemittels, enthaltend ein Aminoplastharz und ein organisches Isocyanat mit mindestens zwei Isocyanatgruppen und gegebenenfalls
D) Additive.

## Beschreibung

Die vorliegende Erfindung betrifft einen leichten holzhaltigen Stoff mit einer mittleren Dichte im Bereich von 200 bis 600 kg/m³, enthaltend, jeweils bezogen auf den holzhaltigen Stoff:
A) 30 bis 95 Gew.-% Holzpartikel;
B) 1 bis 15 Gew.-% eines Füllstoffs mit der Schüttdichte im Bereich von 10 bis 100 kg/m³, ausgewählt aus der Gruppe bestehend aus verschäumbaren Kunststoffteilchen und bereits verschäumten Kunststoffteilchen;
C) 3 bis 50 Gew.-% eines Bindemittels, enthaltend ein Aminoplastharz und ein organisches Isocyanat mit mindestens zwei Isocyanatgruppen und gegebenenfalls
D) Additive.

Weiterhin betrifft die vorliegende Erfindung einen mehrschichtigen Holzwerkstoff enthaltend den erfindungsgemäßen holzhaltigen Stoff, ein Verfahren zur Herstellung von leichten holzhaltigen Stoffen, ein Verfahren zur Herstellung eines mehrschichtigen Holzwerkstoffes, die Verwendung des erfindungsgemäßen leichten holzhaltigen Stoffs und des erfindungsgemäßen mehrschichtigen Holzwerkstoffs, die Verwendung eines Bindemittels, enthaltend ein Aminoplastharz und ein organisches Isocyanat mit mindestens zwei Isocyanatgruppen, wobei das molare Formaldehyd : -NH₂-Gruppen-Verhältnis im Bereich von 0,3 bis 1,0 liegt, zur Herstellung holzhaltiger Stoffe oder mehrschichtiger Holzwerkstoffe mit einer Dichte im Bereich von 200 bis 600 kg/m³.

Holzwerkstoffe, insbesondere mehrschichtige Holzwerkstoffe, sind eine kostengünstige und Ressourcen schonende Alternative zu Massivholz und haben große Bedeutung insbesondere im Möbelbau, bei Laminatfußboden und als Baumaterialien erlangt. Als Ausgangsstoffe dienen Holzpartikel unterschiedlicher Stärke, z. B. Holzspäne oder Holzfasern aus verschiedenen Hölzern. Solche Holzpartikel werden üblicherweise mit natürlichen und/oder synthetischen Bindemitteln und gegebenenfalls unter Zugabe weiterer Additive zu platten- oder strangförmigen Holzwerkstoffen verpresst.

Um gute mechanische Eigenschaften der Holzwerkstoffe zu erzielen, werden diese mit einer Dichte von ca. 650 kg/m³ und mehr hergestellt. Anwendern, insbesondere Privatkonsumenten, sind Holzwerkstoffe dieser Dichte oder die entsprechenden Teile, wie Möbel, oft zu schwer.

Der industrielle Bedarf an leichten Holzwerkstoffen ist daher in den letzten Jahren stetig gestiegen, insbesondere seit Mitnahmemöbel an Beliebtheit gewonnen haben. Ferner bedingt der steigende Ölpreis, der zu einer fortwährenden Verteuerung von beispielsweise den Transportkosten führt, ein verstärktes Interesse an leichten Holzwerkstoffen.

Zusammengefasst sind leichte Holzwerkstoffe aus den folgenden Gründen von großer Bedeutung:
Leichte Holzwerkstoffe führen zu einer einfacheren Handhabbarkeit der Produkte durch den Endkunden, beispielsweise beim Einpacken, Transportieren, Auspacken oder Aufbauen der Möbel.

Leichte Holzwerkstoffe führen zu geringeren Transport- und Verpackungskosten, ferner können bei der Herstellung von leichten Holzwerkstoffen Materialkosten eingespart werden.

Leichte Holzwerkstoffe können beispielsweise beim Einsatz in Transportmitteln zu einem geringeren Energieverbrauch dieser Transportmittel führen. Ferner können unter Verwendung von leichten Holzwerkstoffen beispielsweise materialaufwendige Dekorteile, wie derzeit in Mode gekommene dickere Arbeitsplatten und Wangen bei Küchen, kostengünstiger angeboten werden.

Vor diesem Hintergrund und vor dem Hintergrund zunehmender Reglementierung zur weiteren Reduzierung von Formaldehydemissionen aus Holzwerkstoffen besteht der Wunsch leichte Holzwerkstoffe mit geringerer Formaldehydemission aber nach wie vor guter Anwendungs- und Verarbeitungseigenschaften zur Verfügung zu stellen.

Im Stand der Technik finden sich vielfältige Vorschläge, die Dichte der Holzwerkstoffe zu verringern.

Als leichte Holzwerkstoffe, die erhältlich sind durch konstruktive Maßnahmen, sind beispielsweise Röhrenspanplatten und Wabenplatten zu nennen. Durch ihre besonderen Eigenschaften kommen Röhrenspanplatten hauptsächlich bei der Herstellung von Türen als Innenlage zum Einsatz.

Nachteilig bei der Wabenplatte ist zum Beispiel der zu geringe Schraubenauszugswiderstand, das erschwerte Befestigen von Beschlägen und die Schwierigkeiten bei der Bekantung.

Ferner finden sich im Stand der Technik Vorschläge, die Dichte der Holzwerkstoffe durch Zusätze zum Leim oder zu den Holzpartikeln zu verringern.

In CH 370229 werden leichte und gleichzeitig druckfeste Formpressstoffe beschrieben, die aus Holzspänen oder-fasern, einem Bindemittel und einem als Füllstoff dienenden porösen Kunststoff bestehen. Zur Herstellung der Formpressstoffe werden die Holzspäne oder -fasern mit Bindemittel und verschäumbaren oder teilweise verschäumbaren Kunststoffen gemischt, und das erhaltene Gemisch bei erhöhter Temperatur verpresst. Als Bindemittel sind alle für die Verleimung von Holz geeigneten üblichen Bindemittel, wie beispielsweise Harnstoff-Formaldehyd-Harze, brauchbar. Als Füllstoffe kommen verschäumbare oder bereits verschäumte Kunststoffteilchen, bevorzugt expandierbare Thermoplaste wie Styrolpolymerisate, in Frage. Die in den Beispielen beschriebenen Platten weisen bei einer Dicke von 18 bis 21 mm, eine Dichte von 220 kg/m³ bis 430 kg/m³ und eine mittlere Biegefestigkeit von 3,6 N/mm² bis 17,7 N/mm² auf. Die Querzugsfestigkeiten werden in den Beispielen nicht angegeben. Zur Formaldehydemission oder einer Kombination von Aminoplasten und Isocyanaten im Bindemittel äußert sich CH 370229 nicht.

WO 02/38676 beschreibt ein Verfahren zur Herstellung von leichten Produkten, in dem 5 bis 40 Gew.-% verschäumbares oder bereits verschäumtes Polystyrol mit einer Teilchengröße von kleiner 1 mm, 60 bis 95 Gew.-% lignocellulosehaltiges Material und Bindemittel vermischt und bei erhöhter Temperatur und erhöhtem Druck zu dem fertigen Produkt verpresst werden. Es werden die üblichen Bindemittel genannt, unter anderem MDI. Zur Formaldehydemission oder einer Kombination von Aminoplasten und Isocyanaten im Bindemittel äußert sich WO 02/38676 nicht.

US 2005/0019548 beschreibt leichte OSB-Platten unter Verwendung von Füllstoffen mit geringer Dichte. Als Bindemittel werden polymere Bindemittel, beispielsweise 4,4-Diphenyl-methan-diisocyanat-Harz beschrieben. Als Füllstoffe werden Glas, Keramik, Perlit oder polymere Materialien beschrieben. Das polymere Material wird in einer Menge von 0,8 bis 20 Gew.-% bezogen auf die OSB-Platte eingesetzt. Als polymeres Material wird in den Beispielen das Material Dualite eingesetzt, das aus Polypropylen, Polyvinylidenchlorid oder Polyacrylnitril besteht. Es wird eine Gewichtsreduzierung von 5 % beschrieben. In den Beispielen werden OSB-Platten mit einer Dichte von 607 bis 677 kg/m³ und einer Querzugsfestigkeit von 0,31 bis 0,59 N/mm² beschrieben. Zur Formaldehydemission oder einer Kombination von Aminoplasten und Isocyanaten im Bindemittel äußert sich US 2005/0019548 nicht.

JP 06031708 beschreibt leichte Holzwerkstoffe, wobei für die Mittelschicht einer Dreischichtspanplatte eine Mischung aus 100 Gewichtsteilen Holzpartikeln und 5 bis 30 Gewichtsteilen Partikeln aus synthetischem Harzschaum verwendet werden, wobei diese Harz-Partikel ein spezifisches Gewicht von nicht mehr als 0,3 g/cm³ und eine Druckfestigkeit von mindestens 30 kg/cm² aufweisen. Ferner wird beschrieben, dass die spezifische Dichte der Holzpartikel einen Wert von 0,5 g/cm³ nicht überschreiten sollte. Die Bindemittel unterliegen laut JP 06031708 keinen Restriktionen und es können die üblichen eingesetzt werden, unter anderem polyfunktionelle Isocyanate. Zur Formaldehydemission oder einer Kombination von Aminoplasten und Isocyanaten im Bindemittel äußert sich JP 06031708 nicht.

EP 0 025 245 B beschreibt ein Verfahren zur Herstellung von Spanplatten mit einem Bindemittel aus Polyisocyanat und Aminoplastleim, wobei der Aminoplastleim unter Verwendung von 0,25 bis 0,625 Mol Formaldehyd je Moläquivalent Aminogruppen hergestellt wird. EP 0 025 245 B offenbart nicht Füllstoffe oder die Dichte der Spanplatten.

Der Nachteil des Standes der Technik besteht zusammengefasst darin, dass die beschriebenen leichten (Holz)Werkstoffe für die Möbelherstellung eine zu geringe mechanische Festigkeit, wie beispielsweise einen zu geringen Schraubenauszugswiderstand, aufweisen.

Eine zu geringe mechanische Festigkeit kann beispielsweise zum Brechen oder Reißen der Bauelemente führen. Ferner neigen diese Bauelemente beim Bohren oder Sägen zum zusätzlichen Abplatzen von weiterem Holzmaterial. Bei diesen Werkstoffen ist das Befestigen von Beschlägen erschwert.

Weiterhin ist die Bekantbarkeit, also das Aufbringen und Haften von Kantenmaterial, zum Beispiel auf Spanplatten, im Stand der Technik noch unbefriedigend.

Auch im Hinblick auf die Formaldehydemissionen bleibt bei den Holzwerkstoffen des Standes der Technik Raum für Verbesserungen.

Die Aufgabe der vorliegenden Erfindung bestand darin, leichte holzhaltige Stoffe und leichte Holzwerkstoffe mit niedriger Formaldehydemission aufzuzeigen, die eine im Vergleich zu den handelsüblichen Holzwerkstoffen geringere Dichte aufweisen bei guten mechanischen Festigkeiten und guten Verarbeitungseigenschaften, insbesondere Bekantbarkeit.

Die mechanische Festigkeit kann beispielsweise durch die Messung der Querzugsfestigkeit nach EN 319 bestimmt werden.

Für die Bewertung der Bekantbarkeit oder des Aufklebens von Kanten auf Spanplatten kann das TKH-Merkblatt (Technische Komission Holzklebstoffe im Industrieverband Klebstoffe e.V.) vom Januar 2006, Tabelle 10 herangezogen werden. Ein Test für die Bekantbarkeit ist in den Beispielen beschrieben.

Ferner sollten diese leichten Holzwerkstoffe vorzugsweise unter Verwendung von heimischen, europäischen Hölzern herstellbar sein.

Weiterhin sollte der Quellwert der leichten Holzwerkstoffe durch die verringerte Dichte nicht negativ beeinträchtigt werden.

Die Aufgabe wurde gelöst durch einen leichten holzhaltigen Stoff mit einer mittleren Dichte im Bereich von 200 bis 600 kg/m³, enthaltend, jeweils bezogen auf den holzhaltigen Stoff:
A) 30 bis 95 Gew.-% Holzpartikel;
B) 1 bis 15 Gew.-% eines Füllstoffs mit der Schüttdichte im Bereich von 10 bis 100 kg/m³, ausgewählt aus der Gruppe bestehend aus verschäumbaren Kunststoffteilchen und bereits verschäumten Kunststoffteilchen;
C) 3 bis 50 Gew.-% eines Bindemittels, enthaltend ein Aminoplastharz und ein organisches Isocyanat mit mindestens zwei Isocyanatgruppen und gegebenenfalls
D) Additive.

Die Summe der Komponenten A) bis D) beträgt 100 Gew.-% und ist auf den Feststoff des holzhaltigen Stoffes bezogen.

Der holzhaltige Stoff kann die üblichen geringen Mengen Wasser (in einer üblichen geringen Schwankungsbreite) enthalten; dieses Wasser ist bei den Gewichtsangaben der vorliegenden Anmeldung nicht berücksichtigt.

Die Gewichtsangabe der Holzpartikel bezieht sich auf in üblicher dem Fachmann bekannter Weise getrocknete Holzpartikel.

Die Gewichtsangabe des Bindemittels bezieht sich im Hinblick auf die Aminoplastkomponente im Bindemittel auf den Feststoffgehalt der entsprechenden Komponente (bestimmt durch Verdunsten des Wassers bei 120 °C, innerhalb von 2 h nach, zum Beispiel, Günter Zeppenfeld, Dirk Grunwald, Klebstoffe in der Holz- und Möbelindustrie, 2. Auflage, DRW-Verlag, Seite 268) und im Hinblick auf das Isocyanat, insbesondere das PMDI, auf die Isocyanatkomponente an sich, also zum Beispiel ohne Lösungsmittel oder Emulgiermedium.

Die erfindungsgemäßen leichten holzhaltigen Stoffe haben eine mittlere Dichte von 200 bis 600 kg/m³, bevorzugt 200 bis 575 kg/m³, besonders bevorzugt 250 bis 550 kg/m³, insbesondere 300 bis 500 kg/m³.

Die Querzugsfestigkeit der erfindungsgemäßen leichten holzhaltigen Stoffe oder vorzugsweise der erfindungsgemäßen mehrschichtigen Holzwerkstoffe liegt im Bereich von 0,1 N/mm², bis 1,0 N/mm², bevorzugt 0,3 bis 0,8 N/mm², besonders bevorzugt 0,4 bis 0,6 N/mm².

Die Bestimmung der Querzugsfestigkeit erfolgt nach EN 319.

Als mehrschichtige Holzwerkstoffe kommen alle Werkstoffe in Betracht, die aus Holzfurnieren, vorzugsweise mit einer mittleren Dichte der Holzfurniere von 0,4 bis 0,85 g/cm³, gefertigt sind, beispielsweise Furnierplatten oder Sperrholzplatten oder Laminated Veneer Lumber (LVL).

Als mehrschichtige Holzwerkstoffe kommen auch alle Werkstoffe in Betracht, die aus Holzspänen, vorzugsweise mit einer mittleren Dichte der Holzspäne von 0,4 bis 0,85 g/cm³ gefertigt sind, beispielsweise Spanplatten oder OSB-Platten, sowie Holzfaserwerkstoffe wie LDF-, MDF- und HDF-Platten. Bevorzugt sind Spanplatten und Faserplatten, insbesondere Spanplatten.

Die mittlere Dichte der Holzpartikel der Komponente A) liegt in der Regel bei 0,4 bis 0,85 g/cm³, bevorzugt bei 0,4 bis 0,75 g/cm³, insbesondere bei 0,4 bis 0,6 g/cm³.

Für die Herstellung der Holzpartikel kommt jede beliebige Holzart in Frage; gut geeignet sind beispielsweise Fichten-, Buchen-, Kiefern-, Lärchen-, Linden-, Pappeln-, Eschen-, Kastanien- oder Tannenholz, bevorzugt sind Fichten- und/oder Buchenholz, insbesondere Fichtenholz.

Die Dimensionen der Holzpartikel sind nicht kritisch und richten sich wie üblich nach dem herzustellenden Holzwerkstoff, zum Beispiel den oben genannten Holzwerkstoffen, wie Spanplatte oder OSB.

Als Füllstoff B) kommen verschäumbare noch kompakte oder aber bereits verschäumte Kunststoffteilchen, vorzugsweise thermoplastische Kunststoffteilchen in Frage. Es können aber auch Kunststoffteilchen verwendet werden, die sich in einem beliebigen Zwischenstadium der Verschäumung befinden. Wenn nicht ausdrücklich anders beschrieben, werden alle diese schäumbaren oder verschäumten oder vorgeschäumten Kunststoffteilchen im folgenden erfindungsgemäße Kunststoffteilchen genannt.

Der Begriff verschäumter Kunststoff oder speziell Schaumstoff ist zum Beispiel in DIN 7726: 1982 - 05 erläutert.

Als Komponente für die Füllstoffe B) kommen auch Kunststoff-Schaumstoff-Teilchen in Frage, die aus Formkörpern zum Beispiel aus Polyurethanschaumformkörpern, Polystyrolschaumformkörpern, durch Zerkleinern gewonnen werden können.

Geeignete Polymere, die den erfindungsgemäßen Kunststoffteilchen zugrunde liegen sind alle Polymere, vorzugsweise thermoplastische Polymere, die sich verschäumen lassen. Diese sind dem Fachmann bekannt.

Gut geeignete derartige Polymere sind beispielsweise PVC (hart und weich), Polycarbonate, Polyisocyanurate, Polycarbodiimide, Polyacrylimide und Polymethacrylimide, Polyamide, Polyurethane, Aminoplastharze und Phenolharze, Styrolhomopolymere, Styrolcopolymere, C₂-C₁₀-Olefinhomopolymere, C₂-C₁₀-Olefincopolymere und Polyester. Bevorzugt verwendet man zur Herstellung der genannten Olefinpolymere die 1-Alkene, zum Beispiel Ethylen, Propylen, 1-Buten, 1-Hexen, 1-Octen.

Die erfindungsgemäßen Kunststoffteilchen der Komponente B) weisen eine Schüttdichte, von 10 bis 100 kg/m³ auf, bevorzugt 15 bis 80 kg/m³, besonders bevorzugt 20 bis 70 kg/m³, insbesondere 30 bis 60 kg/m³. Die Schüttdichte wird üblicherweise durch Wiegen eines mit dem Schüttgut gefüllten definierten Volumens ermittelt.

Vorgeschäumte erfindungsgemäße Kunsstoffteilchen werden im allgemeinen in Form von Kugeln oder Perlen mit einem mittleren Durchmesser von vorteilhaft 0,25 bis 10 mm, bevorzugt 0,5 bis 5 mm, insbesondere 0,75 bis 3 mm, eingesetzt.

Vorgeschäumte erfindungsgemäße Kunststoffteilchen-Kugeln weisen vorteilhaft eine kleine Oberfläche pro Volumen auf, beispielsweise in Form eines sphärischen oder elliptischen Partikels.

Die vorgeschäumten erfindungsgemäße Kunststoffteilchen-Kugeln sind vorteilhaft geschlossenzellig. Die Offenzelligkeit nach DIN-ISO 4590 beträgt in der Regel weniger als 30 %.

Besteht der Füllstoff B) aus unterschiedlichen Polymertypen, also Polymertypen denen unterschiedliche Monomere zugrunde liegen (beispielsweise Polystyrol und Polyethylen oder Polystyrol und Homo-Polypropylen oder Polyethylen und Homo-Polypropylen), so können diese in unterschiedlichen Gewichtsverhältnissen vorliegen, die allerdings, nach derzeitigem Stand des Wissens, nicht kritisch sind.

Des weiteren können den erfindungsgemäßen Thermoplasten Additive, Keimbildner, Weichmacher, Flammschutzmittel, lösliche und unlösliche anorganische und/oder organische Farbstoffe und Pigmente, z. B. IR-Absorber, wie Ruß, Graphit oder Aluminiumpulver, gemeinsam oder räumlich getrennt als Zusatzstoffe zugegeben werden.

Vorzugsweise verwendet man Polystyrol und/oder Styrolcopolymerisat als einzige erfindungsgemäße Kunststoffteilchen-Komponente in Füllstoff B).

Der Füllstoff Polystyrol und/oder Styrolcopolymerisat kann nach allen den Fachmann bekannten Polymerisierungsverfahren hergestellt werden [siehe z. B. Ullmann's Encyclopedia, Sixth Edition, 2000 Electronic Release]. Beispielsweise erfolgt die Herstellung in an sich bekannter Weise durch Suspensionspolymerisation oder mittels Extrusionsverfahren.

Bei der Suspensionspolymerisation wird Styrol, gegebenenfalls unter Zusatz weiterer Comonomere in wässriger Suspension in Gegenwart eines üblichen Suspensionsstabilisators mittels radikalbildender Katalysatoren polymerisiert. Das Treibmittel und gegebenenfalls weitere Zusatzstoffe können dabei bei der Polymerisation mit vorgelegt werden oder im Laufe der Polymerisation oder nach beendeter Polymerisation dem Ansatz zugefügt werden. Die erhaltenen perlförmigen expandierbaren Styrolpolymerisate werden nach beendeter Polymerisation von der wässrigen Phase abgetrennt, gewaschen, getrocknet und gesiebt.

Bei dem Extrusionsverfahren wird das Treibmittel beispielsweise über einen Extruder in das Polymer eingemischt, durch eine Düsenplatte gefördert und zu Partikeln oder Strängen granuliert.

Als Treibmittel können alle dem Fachmann bekannten Treibmittel verwendet werden, beispielsweise C₃- bis C₆-Kohlenwasserstoffe, wie Propan, n-Butan, Isobutan, n-Pentan, Isopentan, Neopentan und/oder Hexan, Alkohole, Ketone, Ether oder halogenierte Kohlenwasserstoffe. Vorzugsweise wird ein handelsübliches Pentanisomerengemisch verwendet.

Des weiteren können den Styrolpolymerisaten Additive, Keimbildner, Weichmacher, Flammschutzmittel, lösliche und unlösliche anorganische und/oder organische Farbstoffe und Pigmente, z. B. IR-Absorber, wie Ruß, Graphit oder Aluminiumpulver, gemeinsam oder räumlich getrennt als Zusatzstoffe zugegeben werden.

Gegebenenfalls können auch Styrolcopolymerisate eingesetzt werden, vorteilhaft weisen diese Styrolcopolymerisate mindestens 50 Gew.-%, vorzugsweise mindestens 80 Gew.-%, einpolymerisiertes Styrol auf. Als Comonomere kommen z. B. α-Methylstyrol, kernhalogenierte Styrole, Acrylnitril, Ester der Acryl- oder Methacrylsäure von Alkoholen mit 1 bis 8 C-Atomen, N-Vinylcarbazol, Maleinsäure(anhydrid), (Meth)acrylamide und/oder Vinylacetat in Betracht.

Vorteilhaft kann das Polystyrol und/oder Styrolcopolymerisat eine geringe Menge eines Kettenverzweigers einpolymerisiert enthalten, d. h. einer Verbindung mit mehr als einer, vorzugsweise zwei Doppelbindungen, wie Divinylbenzol, Butadien und/oder Butandioldiacrylat. Der Verzweiger wird im Allgemeinen in Mengen von 0,005 bis 0,05 Mol-%, bezogen auf Styrol, verwendet.

Vorteilhaft verwendet man Styrol(co)polymerisate mit Molekulargewichten und Molgewichtsverteilungen, wie sie in EP-B 106 129 und in DE-A 39 21 148 beschrieben sind. Bevorzugt werden Styrol(co)polymerisate mit einem Molekulargewicht im Bereich von 190.000 bis 400.000 g/mol eingesetzt.

Auch Mischungen verschiedener Styrol(co)polymerisate können verwendet werden.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-a-Methylstyrol-copolymere, Acrylnitril-Butadien-Styrolpolymerisate (ABS), Styrol-Acrylnitril (SAN), Acrylnitril-Styrol-Acrylester (ASA), Methylacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt.

Als Polystyrol wird besonders bevorzugt Styropor^{®}, Neopor^{®} und/oder Peripor^{®} der Firma BASF Aktiengesellschaft eingesetzt.

Vorteilhaft wird bereits vorgeschäumtes Polystyrol und/oder Styrolcopolymerisate eingesetzt.

Generell lässt sich das vorgeschäumte Polystyrol nach allen dem Fachmann bekannten Verfahren herstellen (beispielsweise DE 845 264). Für die Herstellung von vorgeschäumten Polystyrol und/oder vorgeschäumten Styrolcopolymerisaten werden die expandierbaren Styrolpolymerisate in bekannter Weise durch Erhitzen auf Temperaturen oberhalb ihres Erweichungspunkts, beispielsweise mit Heißluft oder vorzugsweise Dampf, expandiert.

Das vorgeschäumte Polystyrol oder vorgeschäumte Styrolcopolymerisat weist vorteilhaft eine Schüttdichte von 10 bis 100 kg/m³ auf, bevorzugt 15 bis 80 kg/m³, besonders bevorzugt 20 bis 70 kg/m³, insbesondere 30 bis 60 kg/m³.

Das vorgeschäumte Polystyrol oder vorgeschäumte Styrolcopolymerisat wird vorteilhaft in Form von Kugeln oder Perlen mit einem mittleren Durchmesser von vorteilhaft 0,25 bis 10 mm, bevorzugt 0,5 bis 5 mm, insbesondere 0,75 bis 3 mm, eingesetzt.

Die vorgeschäumten Polystyrol- oder vorgeschäumten Styrolcopolymerisat-Kugeln weisen vorteilhaft eine kleine Oberfläche pro Volumen auf, beispielsweise in Form eines sphärischen oder elliptischen Partikels.

Die vorgeschäumten Polystyrol- oder vorgeschäumten Styrolcopolymerisat-Kugeln sind vorteilhaft geschlossenzellig. Die Offenzelligkeit nach DIN-ISO 4590 beträgt in der Regel weniger als 30 %.

Als Ausgangsmaterial für geschäumtes Polystyrol oder geschäumtes Styrolcopolymerisat können Formteile aus geschäumtem Styrolpolymerisat oder Styrolcopolymerisat dienen. Diese können mit den üblichen Zerkleinerungsmethoden bis zum Grad der einzelnen Styrolpolymerisat- oder Styrolcopolymerisat-Teilchen, vorzugsweise kugelförmig, zerkleinert werden. Eine gut geeignete und bevorzugte Zerkleinerungsmethode ist das Mahlen.

Formteile aus geschäumtem Styrolpolymerisat oder Styrolcopolymerisat dienen zum Beispiel als Verpackungsmaterial oder Dämm-Material.

Als Ausgangsmaterial für geschäumtes Polystyrol- oder geschäumtes Styrolcopolymerisat können Formteile aus geschäumtem Styrolpolymerisat oder Styrolcopolymerisat dienen, die für die Entsorgung vorgesehen sind, zum Beispiel Styrolpolymerisat- oder Styrolcopolymerisatverpackungsmaterial-Abfall oder Styrolpolymerisat- oder Styrolcopolymerisatdämmmaterial-Abfall.

Besonders bevorzugt weist das Polystyrol oder Styrolcopolymerisat oder das vorgeschäumte Polystyrol oder vorgeschäumte Styrolcopolymerisat eine antistatische Beschichtung auf.

Als Antistatikum können die in der Technik üblichen und gebräuchlichen Substanzen verwendet werden. Beispiele sind N,N-Bis(2-hydroxyethyl)-C₁₂-C₁₈-alkylamine, Fettsäurediethanolamide, Cholinesterchloride von Fettsäuren, C₁₂-C₂₀-Alkylsulfonate, Ammoniumsalze.

Geeignete Ammoniumsalze enthalten am Stickstoff neben Alkylgruppen 1 bis 3 hydroxylgruppenhaltige organische Reste.

Geeignete quaternäre Ammoniumsalze sind beispielsweise solche, die am Stickstoff-Kation 1 bis 3, vorzugsweise 2, gleiche oder verschiedene Alkylreste mit 1 bis 12, vorzugsweise 1 bis 10 C-Atomen, und 1 bis 3, vorzugsweise 2 gleiche oder verschiedene Hydroxyalkyl- oder Hydroxyalkylpolyoxyalkylen-Reste gebunden enthalten, mit einem beliebigen Anion, wie Chlorid, Bromid, Acetat, Methylsulfat oder p-Toluolsulfonat.

Die Hydroxyalkyl- und Hydroxyalkyl-polyoxyalkylen-Reste sind solche, die durch Oxyalkylierung eines Stickstoff-gebundenen Wasserstoffatoms entstehen und leiten sich von 1 bis 10 Oxyalkylenresten, insbesondere Oxyethylen- und Oxypropylen-Resten ab.

Besonders bevorzugt wird als Antistatikum ein quartäres Ammoniumsalz oder ein Alkalisalz, insbesondere Natriumsalz eines C₁₂-C₂₀ Alkansulfonats, z. B Emulgator K30 von Bayer AG, oder Mischungen davon eingesetzt. Die Antistatika können in der Regel sowohl als Reinsubstanz als auch in Form einer wässrigen Lösung zugegeben werden.

Das Antistatikum kann beim Verfahren zur Herstellung von Polystyrol oder Styrolcopolymerisat analog den üblichen Zusatzstoffen zugesetzt werden oder nach der Herstellung der Polystyrolpartikel als Beschichtung aufgetragen werden.

Das Antistatikum wird vorteilhaft in einer Menge von 0,05 bis 6 Gew.-%, bevorzugt 0,1 bis 4 Gew.-%, bezogen auf das Polystyrol oder Styrolcopolymerisat, eingesetzt.

Die Füllstoff-Teilchen B) liegen vorteilhaft auch nach dem Verpressen zum leichten Holzwerkstoff, vorzugsweise mehrschichtigen Holzwerkstoff, in einem Zustand vor, in welchem ihre ursprüngliche Form noch erkennbar ist. Gegebenenfalls kann es zu einem Schmelzen der Füllstoff-Teilchen, die sich auf der Oberfläche des leichten holzhaltigen Stoffs oder vorzugsweise des mehrschichtigen Holzwerkstoffs befinden, kommen.

Die Gesamtmenge des Füllstoffs B), bezogen auf den leichten holzhaltigen Stoff, liegt im Bereich von 1 bis 15 Gew.-%, vorzugsweise 3 bis 15 Gew.-%, besonders bevorzugt 3 bis 12 Gew.-%.

Die Gesamtmenge des Füllstoffs B) mit Polystyrol und/oder Styrolcopolymerisat als einziger Kunststoffteilchen-Komponente, bezogen auf den leichten holzhaltigen Stoff, liegt im Bereich von 1 bis 15 Gew.-%, vorzugsweise 3 bis 15 Gew.-%, besonders bevorzugt 3 bis 12 Gew.-%.

Das Bindemittel C) enthält als wesentliche Komponenten ein Aminoplastharz und ein organisches Isocyanant mit mindestens zwei Isocyanatgruppen. Auf diese Komponenten beziehen sich in der vorliegenden Anmeldungen die absoluten und prozentualen Mengenangaben im Hinblick auf die Komponente C).

Das Bindemittel C) enthält in der Regel die dem Fachmann bekannten für Aminoplaste im allgemeinen eingesetzten und üblicherweise als Härter bezeichneten Substanzen, wie Ammoniumsulfat oder Ammoniumnitrat oder anorganische oder organische Säuren, zum Beispiel Schwefelsäure, Ameisensäure, oder säureregenerierende Substanzen, wie Aluminiumchlorid, Aluminiumsulfat, jeweils in den üblichen, geringen Mengen, beispielsweise im Bereich von 0,1 Gew.-% bis 3 Gew.-%, bezogen auf die Gesamtmenge an Aminoplastharz im Bindemittel C).

Als Aminoplastharz werden hier Polykondensationsprodukte aus Verbindungen mit mindestes einer, gegebenenfalls teilweise mit organischen Resten substituierten, Carbamidgruppe (die Carbamidgruppe wird auch Carboxamidgruppe genannt) und einem Aldehyd, vorzugsweise Formaldehyd, verstanden.

Als gut geeignetes Aminoplastharz können alle dem Fachmann, vorzugsweise die für die Herstellung von Holzwerkstoffen bekannten, Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben.

Bevorzugte Aminoplastharze sind Polykondensationsprodukte aus Verbindungen mit mindestes einer, auch teilweise mit organischen Resten substituierten, Carbamidgruppe und Formaldehyd.

Besonders bevorzugte Aminoplastharze sind Harnstoff-Formaldehydharze (UF-Harze), Melamin-Formaldehydharze (MF-Harze) oder melaminhaltige Harnstoff-Formaldehyd-harze (MUF-Harze).

Ganz besonders bevorzugte Aminoplastharze sind Harnstoff-Formaldehydharze, beispielsweise Kaurit^{®} Leim-Typen der Firma BASF Aktiengesellschaft.

Weiterhin ganz bevorzugte Aminoplastharze sind Polykondensationsprodukte aus Verbindungen mit mindestes einer, auch teilweise mit organischen Resten substituierten, Aminogruppe und Aldehyd, worin das molare Verhältnis Aldehyd : gegebenenfalls teilweise mit organischen Resten substituierten Amino-Gruppe im Bereich von 0,3 bis 1,0, bevorzugt 0,3 bis 0,60, besonders bevorzugt 0,3 bis 0,45, ganz besonders bevorzugt 0,30 bis 0,40 liegt.

Weiterhin ganz bevorzugte Aminoplastharze sind Polykondensationsprodukte aus Verbindungen mit mindestes einer Aminogruppe -NH2 und Formaldehyd, worin das molare Verhältnis Formaldehyd : -NH₂-Gruppe im Bereich von 0,3 bis 1,0, bevorzugt 0,3 bis 0,60, besonders bevorzugt 0,3 bis 0,45, ganz besonders bevorzugt 0,30 bis 0,40 liegt.

Weiterhin ganz bevorzugte Aminoplastharze sind Harnstoff-Formaldehydharze (UF-Harze), Melamin-Formaldehydharze (MF-Harze) oder melaminhaltige Harnstoff-Formaldehydharze (MUF-Harze), worin das molare Verhältnis Formaldehyd : -NH₂-Gruppe im Bereich von 0,3 bis 1,0, bevorzugt 0,3 bis 0,60, besonders bevorzugt 0,3 bis 0,45, ganz besonders bevorzugt 0,30 bis 0,40 liegt.

Weiterhin ganz bevorzugte Aminoplastharze sind Harnstoff-Formaldehydharze (UF-Harze), worin das molare Verhältnis Formaldehyd : -NH₂-Gruppe im Bereich von 0,3 bis 1,0, bevorzugt 0,3 bis 0,60, besonders bevorzugt 0,3 bis 0,45, ganz besonders bevorzugt 0,30 bis 0,40 liegt.

Die genannten Aminoplastharze werden üblicherweise in flüssiger Form, meist in einem flüssigen Suspendiermittel suspendiert, vorzugsweise in wässriger Suspension, eingesetzt, können aber auch als Feststoff eingesetzt werden.

Der Feststoffgehalt der Aminoplastharz-Suspensionen, vorzugsweise wässrigen Suspension, liegt üblicherweise bei 25 bis 90 Gew.-%, vorzugsweise bei 50 bis 70 Gew.-%.

Der Feststoffgehalt des Aminoplast-Harzes in wässriger Suspension kann nach Günter Zeppenfeld, Dirk Grunwald, Klebstoffe in der Holz- und Möbelindustrie, 2. Auflage, DRW-Verlag, Seite 268 bestimmt werden. Zur Bestimmung des Feststoffgehalts von Aminoplast-Leimen wird 1 g Aminoplast-Leim in eine Wägeschale genau eingewogen, am Boden fein verteilt und 2 Stunden bei 120 °C in einem Trockenschrank getrocknet. Nach Temperierung auf Raumtemperatur in einem Exsikkator wird der Rückstand gewogen und als prozentualer Anteil der Einwaage berechnet.

Die Aminoplastharze werden nach bekannten Verfahren (siehe oben angegebene UIImann-Literatur "Aminoplaste" und "Amino Resins", sowie oben angegebene Literatur Dunky et al.) durch Umsetzen der Carbamidgruppen-haltigen Verbindungen, vorzugsweise Harnstoff und/oder Melamin, mit den Aldehyden, vorzugsweise Formaldehyd, in den gewünschten Molverhältnissen Carbamidgruppe : Aldehyd, vorzugsweise in Wasser als Lösungsmittel, hergestellt.

Das Einstellen des gewünschten molaren Verhältnisses Aldehyd, vorzugsweise Formaldehyd : gegebenenfalls teilweise mit organischen Resten substituierten Amino-Gruppe kann auch durch Zusatz von -NH₂-Gruppen-tragenden Monomeren zu formaldehydreicheren fertigen, vorzugsweise kommerziellen, Aminoplastharzen geschehen. NH₂-Gruppen-tragende Monomere sind vorzugsweise Harnstoff, Melamin, besonders bevorzugt Harnstoff.

Die weitere Komponente des Bindemittels C) ist ein organisches Isocyanat mit mindestens zwei Isocyanatgruppen.

Als gut geeignetes organisches Isocyanat können alle dem Fachmann, vorzugsweise die für die Herstellung von Holzwerkstoffen oder Polyurethanen bekannten, organischen Isocyanate verwendet werden. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomereinheiten und im Mittel mindestens einer Isocyanatgruppe pro Monomereinheit.

Ein besonders bevorzugtes organisches Isocyanat ist das oligomere organische Isocyanat PMDI ("Polymeres Methylendiphenylendüsocyanat") das erhältlich ist durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz).

Im Sinne der vorliegenden Erfindung sehr gut geeignete PMDI-Produkte sind die Produkte der LUPRANAT^{®}-Typenreihe der BASF Aktiengesellschaft, insbesondere LUPRANAT^{®} M 20 FB der BASF Aktiengesellschaft.

Es können auch Mischungen der beschriebenen organischen Isocyanate eingesetzt werden, wobei das Mischungsverhältnis nach derzeitigem Kenntnisstand nicht kritisch ist.

Die Gesamtmenge des Bindemittels C), bezogen auf den leichten holzhaltigen Stoff, liegt im Bereich von 3 bis 50 Gew.-%, vorzugsweise 5 bis 15 Gew.-%, besonders bevorzugt 7 bis 10 Gew.-%.

Hierbei liegt die Gesamtmenge des Aminoplastharzes (immer bezogen auf den Feststoff), vorzugsweise des Harnstoff-Formaldehydharzes und/oder Melamin-Harnstoff-Formaldehydharzes und/oder Melamin-Formaldehydharzes, besonders bevorzugt Harnstoff-Formaldehydharzes, im Bindemittel C), bezogen auf den leichten holzhaltigen Stoff im Bereich von 1 bis 45 Gew.-%, vorzugsweise 4 bis 14 Gew.-%, besonders bevorzugt 6 bis 9 Gew.-%.

Hierbei liegt die Gesamtmenge des organischen Isocyanats, vorzugsweise des oligomeren Isocyanats mit 2 bis 10, vorzugsweise 2 bis 8 Monomereinheiten und im Mittel mindestens einer Isocyanatgruppe pro Monomereinheit, besonders bevorzugt PMDI, im Bindemittel C), bezogen auf den leichten holzhaltigen Stoff im Bereich von 0,1 bis 5 Gew.-%, vorzugsweise 0,25 bis 3,5 Gew.-%, besonders bevorzugt 0,5 bis 1,5 Gew.-%.

Die Mengenverhältnisse des Aminolastharzes zu dem organischen Isocyanat ergeben sich aus den vorstehend beschriebenen Verhältnissen des Bindemittels Aminoplastharz zu leichtem holzhaltigen Stoff beziehungsweise des Bindemittels organisches Isocyanat zu leichtem holzhaltigen Stoff.

Bevorzugte Ausführungsformen des leichten holzhaltigen Stoffs enthalten 55 bis 92,5 Gew.-%, bevorzugt 60 bis 90 Gew.-%, insbesondere 70 bis 88 Gew.-%, bezogen auf den leichten holzhaltigen Stoff, Holzpartikel, wobei die Holzpartikel eine mittlere Dichte von 0,4 bis 0,85 g/cm³, bevorzugt 0,4 bis 0,75 g/cm³, insbesondere 0,4 bis 0,6 g/cm³ aufweisen, 3 bis 15 Gew.-%, bevorzugt 3 bis 12 Gew.-%, insbesondere 3 bis 10 Gew.-% bezogen auf den leichten holzhaltigen Stoff, Polystyrol und/oder Styrolcopolymerisat Füllstoff, wobei der Füllstoff eine Schüttdichte von 10 bis 100 kg/m³, bevorzugt 20 bis 80 kg/m³, insbesondere 30 bis 60 kg/m³ aufweist, und 3 bis 40 Gew.-%, bevorzugt 5 bis 25 Gew.-%, insbesondere 5 bis 15 Gew.-%, bezogen auf den leichten holzhaltigen Stoff, Bindemittel, wobei die Gesamtmenge des Aminoplastharzes, vorzugsweise des Harnstoff-Formaldehydharzes und/oder Melamin-Harnstoff-Formaldehydharzes und/oder Melamin-Formaldehydharzes, besonders bevorzugt Harnstoff-Formaldehydharzes, im Bindemittel C), bezogen auf den leichten holzhaltigen Stoff im Bereich von 1 bis 45 Gew.-%, vorzugsweise 4 bis 14 Gew.-%, besonders bevorzugt 6 bis 9 Gew.-% und wobei die Gesamtmenge des organischen Isocyanats, vorzugsweise des oligomere Isocyanats mit 2 bis 10, vorzugsweise 2 bis 8 Monomereinheiten und im Mittel mindestens einer Isocyanatgruppe pro Monomereinheit, besonders bevorzugt PMDI, im Bindemittel C), bezogen auf den leichten holzhaltigen Stoff im Bereich von 0,1 bis 5 Gew.-%, vorzugsweise 0,25 bis 3,5 Gew.-%, besonders bevorzugt 0,5 bis 1,5 Gew.-% und wobei die mittlere Dichte des leichten holzhaltigen Stoffs im Bereich von 200 bis 600 kg/m³, bevorzugt im Bereich von 300 bis 575 kg/m³, liegt.

Gegebenenfalls können in dem erfindungsgemäßen leichten holzhaltigen Stoff oder dem erfindungsgemäßen mehrschichtigen Holzwerkstoff weitere handelsübliche und dem Fachmann bekannte Additive als Komponente D) vorliegen, zum Beispiel Hydrophobierungsmittel, wie Paraffin-Emulsionen, Pilzschutzmittel und Flammschutzmittel.

Die vorliegende Erfindung betrifft weiterhin einen mehrschichtigen Holzwerkstoff, der mindestens drei Holzwerkstoffschichten enthält, wobei mindestens die mittlere(n) Schicht(en) einen leichten holzhaltigen Stoff mit einer mittleren Dichte im Bereich von 200 bis 600 kg/m³, enthaltend, jeweils bezogen auf den leichten holzhaltigen Stoff
A) 30 bis 95 Gew.-% Holzpartikel;
B) 1 bis 15 Gew.-% eines Füllstoffs mit der Schüttdichte im Bereich von 10 bis 100 kg/m³, ausgewählt aus der Gruppe bestehend aus verschäumbaren Kunststoffteilchen und bereits verschäumten Kunststoffteilchen;
C) 3 bis 50 Gew.-% eines Bindemittels, enthaltend ein Aminoplastharz und ein organisches Isocyanat mit mindestens zwei Isocyanatgruppen und gegebenenfalls
D) Additive
enthält oder enthalten.

Die mittlere Dichte des erfindungsgemäßen mehrschichtigen, vorzugsweise des erfindungsgemäßen dreischichtigen, Holzwerkstoffs liegt im Bereich von 300 kg/m³ bis 600 kg/m³, vorzugsweise im Bereich von 350 kg/m³ bis 600 kg/m³, besonders bevorzugt im Bereich von 400 kg/m³ bis 500 kg/m³.

Bevorzugte Parameterbereiche sowie bevorzugte Ausführungsformen im Hinblick auf die mittlere Dichte des leichten holzhaltigen Stoffs und im Hinblick auf die Komponenten A), B) ,C) und D) sowie die Kombination der Merkmale entsprechen den oben beschriebenen.

Mittlere Schichten im Sinne der Erfindung sind alle Schichten, die nicht die äußeren Schichten sind.

Bevorzugt weisen die äußeren Schichten (üblicherweise "Deckschicht(en)" genannt) keine Füllstoffe auf.

Bevorzugt enthält der erfindungsgemäße mehrschichtige Holzwerkstoff drei Holzstoff-Schichten, wobei die äußeren Deckschichten zusammen 1 bis 25 % der gesamten Dicke des erfindungsgemäßen mehrschichtigen Holzwerkstoffs ausmachen, bevorzugt 3 bis 20 %, insbesondere 5 bis 15 %.

Das für die äußeren Schichten verwendete Bindemittel ist üblicherweise ein Aminoplastharz, beispielsweise Harnstoff-Formaldehydharz (UF), Melamin-Formaldehydharz (MF), Melamin-Harnstoff-Formaldehydharz (MUF) oder das erfindungsgemäße Bindemittel C). Vorzugsweise ist das für die äußeren Schichten verwendete Bindemittel ein Aminoplastharz, besonders bevorzugt ein Harnstoff-Formaldehydharz, ganz besonders bevorzugt ein Aminoplastharz worin das molare Formaldehyd : -NH₂-Gruppen-Verhältnis im Bereich von 0,3 bis 1,0 liegt.

Die Dicke des erfindungsgemäßen mehrschichtigen Holzwerkstoffs variiert mit dem Anwendungsgebiet und liegt in der Regel im Bereich von 0,5 bis 100 mm; vorzugsweise im Bereich von 10 bis 40 mm, insbesondere 15 bis 20 mm.

Ferner betrifft die vorliegende Erfindung ein Verfahren zur Herstellung von erfindungsgemäßen mehrschichtigen Holzwerkstoffen wie oben definiert, wobei man die Komponeten für die einzelnen Schichten übereinanderschichtet und unter erhöhter Temperatur und erhöhtem Druck verpresst.

Die Verfahren zur Herstellung von mehrschichtigen Holzwerkstoffen sind im Prinzip bekannt und zum Beispiel in M. Dunky, P. Niemz, Holzwerkstoffe und Leime, Springer 2002, Seiten 91 bis 150 beschrieben.

Ein Beispiel für ein Verfahren zur Herstellung der erfindungsgemäßen mehrschichtigen Holzwerkstoffe wird im folgenden beschrieben.

Nach der Zerspanung des Holzes werden die Späne getrocknet. Danach werden gegebenenfalls Grob- und Feinanteile entfernt. Die verbleibenden Späne werden durch Sieben oder Sichten im Luftstrom sortiert. Das gröbere Material wird für die Mittelschicht, das feinere für die Deckschichten eingesetzt. Mittelschicht- und Deckschichtspäne werden getrennt voneinander jeweils mit den Komponenten B) (nur die Mittelschicht(en)), C) (Mittelschicht) und gegebenenfalls D) (Mittelschicht und/oder Deckschichten) sowie mit einem Aminoplastharz (Deckschicht) beleimt, beziehungsweise vermischt und anschließend gestreut. Zunächst wird das Deckschichtmaterial auf das Formband gestreut, anschließend das Mittelschichtmaterial - enthaltend die Komponenten B), C) und gegebenfalls D) -und schließlich noch ein mal Deckschichtmaterial. Der so erzeugte dreischichtige Spänekuchen wird kalt (in der Regel bei Raumtemperatur) vorverdichtet und anschließend heiß gepresst. Das Verpressen kann nach allen dem Fachmann bekannten Verfahren erfolgen. Üblicherweise wird der Holzpartikelkuchen bei einer Press-Temperatur von 150 °C bis 230 °C auf die gewünschte Dicke gepresst. Die Pressdauer beträgt normalerweise 3 bis 15 Sekunden pro mm Plattendicke. Man erhält eine dreischichtige Spanplatte.

Bevorzugte Parameterbereiche sowie bevorzugte Ausführungsformen im Hinblick auf die mittlere Dichte des leichten holzhaltigen Stoffs, des mehrschichtigen Holzwerkstoffs und im Hinblick auf die Komponenten A), B) ,C) und gebenenfalls D) sowie die Kombination der Merkmale entsprechen den oben beschriebenen.

In einer weiteren bevorzugten Ausführungsform wird das vorgeschäumte oder nichtvorgeschäumte Polystyrol und/oder Styrolcopolymerisat vor dem Mischen mit dem Bindemittel und/oder den Holzpartikeln mit einer antistatischen Beschichtung versehen. Im Hinblick auf das Antistatikum gilt das oben Gesagte.

Ferner betrifft die vorliegende Erfindung die Verwendung des erfindungsgemäßen leichten holzhaltigen Stoffs und des erfindungsgemäßen mehrschichtigen Holzwerkstoffs zur Herstellung von Gegenständen aller Art, zum Beispiel Möbel, Möbelteile oder Verpackungsmaterialien, die Verwendung des erfindungsgemäßen leichten holzhaltigen Stoffs und des erfindungsgemäßen mehrschichtigen Holzwerkstoffs im Baubereich. Beispiele für Gegenstände aller Art sind neben Möbeln, Möbelteilen und Verpackungsmaterialien, Wand- und Deckenelemente, Türen und Fußböden.

Beispiele für Möbel oder Möbelteile sind Küchenmöbel, Schränke, Stühle, Tische, Arbeitsplatten, beispielsweise für Küchenmöbel, Schreibtischplatten.

Beispiele für Verpackungsmaterialien sind Kisten, Kästen.

Beispiele für den Baubereich sind Hochbau, Tiefbau, Innenausbau, Tunnelbau, wo die erfindungsgemäßen holzhaltigen Stoffe oder erfindungsgemäßen mehrschichtigen Holzwerkstoffe als Verschalungsplatten oder als Träger eingesetzt werden können.

Die Vorteile der vorliegenden Erfindung liegen in der geringen Dichte des erfindungsgemäßen leichten holzhaltigen Stoffs oder erfindungsgemäßen mehrschichtigen Holzwerkstoffs , wobei eine gute mechanische Stabilität beibehalten wird. Ferner lassen sich der erfindungsgemäße leichte holzhaltige Stoff und erfindungsgemäße mehrschichtige Holzwerkstoff leicht herstellen; es besteht kein Bedarf, die bestehenden Anlagen zur Herstellung der erfindungsgemäßen mehrschichtigen Holzwerkstoffe umzurüsten.

Überraschend gut ist die Bekantbarkeit der erfindungsgemäßen leichten holzhaltigen Stoffe oder besonders der mehrschichtigen Holzwerkstoffe. Die Kante haftet besonders gut und ist nicht uneben oder gewellt, die Schmalfläche, insbesondere des mehrschichtigen Holzwerkstoffs, zeichnet sich nicht durch die Kante hindurch ab, die Kante ist druckstabil und die Bekantung kann mit den üblichen Maschinen der Plattenherstellung und Bekantung erfolgen.

Überraschenderweise führen sogar formaldehydarme Leime, also üblicherweise Leime mit einem kleinen molaren Formaldehyd : -NH₂-Gruppenverhältnis im Bereich von 0,3 bis 1,0, vorzugsweise 0,3 bis 0,6, zu leichten holzhaltigen Stoffen oder mehrschichtigen Holzwerkstoffen, wobei die mechanischen Eigenschaften, zum Beispiel die Querzugfestigkeit, derartiger leichter holzhaltiger Stoffe oder mehrschichtiger Holzwerkstoffe unerwartet hoch ist.

Die Quellwerte der erfindungsgemäßen mehrschichtigen Holzwerkstoffe sind vorteilhaft 10 % kleiner, bevorzugt 20 % kleiner, insbesondere 30 % kleiner als die Quellwerte einer analogen Platte gleicher Dichte ohne Füllstoff.

### Beispiele

### Herstellung des vorgeschäumten Polystyrols

Neopor^{®} N2200 (Neopor^{®} ist ein Handelsprodukt und Marke der BASF Aktiengesellschaft) wurde mit Wasserdampf in einem kontinuierlichen Vorschäumer behandelt. Die Schüttdichte von 50 kg/m³ der vorgeschäumten Polystyrolkügelchen wurde durch Variation des Dampfdrucks und der Bedampfungszeit eingestellt. Der mittlere Teilchendurchmesser betrug nach dem Vorschäumen 1,9 bis 2,5 mm.

### B) Herstellung der mehrschichtigen Holzwerkstoffe mit und ohne Füllstoffe unter Verwendung formaldehydreicherer und formaldehydärmerer Harnstoff-Formaldehydleime

### B1) Mischen der Einsatzstoffe

Als Leime wurden Kaurit^{®} Leim 335 und Kaurit^{®} Leim 347 der BASF Aktiengesellschaft verwendet. Das für die Versuche gewünschte molare Formaldehyd : NH2-Gruppen-verhältnis (im folgenden F : NH2) wurde durch Zumischen von festem Harnstoff eingestellt. Der Feststoffgehalt wurde jeweils mit Wasser auf 67 Gew.-% eingestellt. Näheres siehe auch in Tabellen 1 bis 3.

### B1.1) Für die Deckschicht:

In einem Mischer wurden 510 g feine Fichtenspäne (2 % Restfeuchte) mit 82,0 g einer Leimflotte aus 100 Teilen UF-Leim (F : NH2 = 0,52, Feststoffgehalt 67 Gew.-%), 1,4 Teilen einer 52 Gew.-%igen Ammoniumnitratlösung (als Härter), 3,1 Teilen einer 60 Gew.-%igen Paraffin-Emulsion und 15 Teilen Wasser gemischt.

### B1.2) Für die Mittelschicht:

In einem Mischer wurden 5508 g grobe Fichtenspäne (2 % Restfeuchte) bzw. 4957 g Fichtenspäne und 540 g Füllstoff bzw. 4315 g Fichtenspäne und 270 g Füllstoff gemäß Tabellen 1 bis 3 gemischt. Anschließend wurden 753 g einer Leimflotte aus 100 Teilen UF-Leim (F : NH2 gemäß Tabellen 1 bis 3; Feststoffgehalt 67 Gew.-%), 5,9 Teilen einer 52 Gew.-%igen Ammoniumnitratlösung und 4,0 Teilen einer 60 Gew.-%igen Paraffin-Emulsion sowie anschließend gegebenenfalls gemäß Tabellen 1 bis 3 54,0 g PMDI (Lupranat^{®} M 20 FB der BASF Aktiengesellschaft) aufgebracht.

### B 2) Verpressen der beleimten Späne

Das Material für die Herstellung einer dreischichtigen Spanplatte wurde in eine 30 x 30 cm-Form gestreut. Dabei wurde zunächst das Deckschichtmaterial, dann das Mittelschichtmaterial und schließlich wieder das Deckschichtmaterial gestreut. Die Gesamtmasse wurde so gewählt, dass sich am Ende des Pressvorgangs die gewünschte Dichte bei einer Solldicke von 16 mm ergibt. Das Massenverhältnis (Gewichtsverhältnis) Deckschichtmaterial : Mittelschichtmaterial : Deckschichtmaterial betrug bei allen Versuchen 17 : 66 : 17. Als Deckschichtmaterial wurde in allen Versuchen die oben unter B1.1) beschriebene Mischung eingesetzt. Das Mittelschichtmaterial wurde nach B1.2) hergestellt und gemäß Tabellen 1 bis 3 variiert.

Nach dem Streuen wurde bei Raumtemperatur, also "kalt", vorverdichtet und anschließend in einer Heißpresse gepresst (Presstemperatur 210 °C, Presszeit 210 s). Die Solldicke der Platte betrug jeweils 16 mm.

### C) Untersuchung der mehrschichtigen Holzwerkstoffe

### C 1) Dichte

Die Bestimmung der Dichte erfolgte 24 Stunden nach Herstellung nach EN 1058.

### C 2) Querzugsfestigkeit

Die Bestimmung der Querzugsfestigkeit erfolgt nach EN 319.

### C 3) Quellwerte und Wasseraufnahme

Die Bestimmung der Quellwerte und der Wasseraufnahme erfolgte nach DIN EN 317.

### C 4) Formaldehydemission

### Die Formaldehydemission wurde nach DIN EN 120 bestimmt (Perforator-Methode)

### C 5) Bekantbarkeit

Als Kantenmaterial wurde eine Melaminkante (Dicke 0,6 mm) eingesetzt. Als Klebstoff wurde Unitol 089618 der Firma Wetzel GmbH (EVA-Schmelzkleber) verwendet.

200 g/m² Schmelzkleber wurden auf die Schmalfläche des mehrschichtigen Holzwerkstoffs aufgetragen und unmittelbar danach das Kantenmaterial auf die Schmalfläche gepresst, so dass 5 cm Kantenmaterial überstanden. Nach 24 h im Klimaraum (20 °C/65 % Luftfeuchte) wurde am überstehenden Kantenmaterial gezogen (senkrecht zur Schmalfläche) und die Qualität der Verleimung nach einem Schulnotensystem bewertet. 1 = sehr gute Eigenschaften; 6 = ungenügende Eigenschaften. In die Bewertung ging neben der Haftung auch die Optik (gleichmäßige glatte Oberfläche oder Abzeichnung des Plattenmaterials) und die Druckstabilität ein.

Die Ergebnisse der Versuche sind in den Tabellen 1, 2 und 3 zusammengestellt.

In den Tabellen sind nur die Mengenangabe für die Mittelschicht angegeben. Die Deckschichten sind in allen Versuchen gleich (siehe oben). Die Mengenangaben beziehen sich immer auf die Trockensubstanz. Bei der Angabe der Gewichtsteile wird das trockene Holz bzw. die Summe des trockenen Holzes und des Füllstoffs auf 100 Teile gesetzt. Bei der Angabe der Gew.-% ist die Summe aller trockenen Bestandteile der Mittelschicht im fertigen mehrschichtigen Holzwerkstoff gleich 100 %.

Die Messung der Dichte, der Festigkeiten, der Quellwerte, der Wasseraufnahme, der Bekantbarkeit und des Perforatorwerts (Formaldehydemission) erfolgte an der fertigen dreischichtigen Spanplatte.

Die Versuche in Tabelle 1, 2 oder 3 ohne Zusatz von Neopor^{®} und PMDI dienen zum Vergleich.

**Tabelle 1): Versuche mit UF-Leim eines Molverhältnisses F : NH₂ = 0,52**

| Versuch | UF-Leim (F:NH₂ = 0,52) | UF-Leim (F:NH₂ = 0,52) | PMDI Gew.-Teile | PMDI Gew.-% | Holz Gew.-Teile | Holz Gew.-% | Neopor Gew.-Teile | Neopor Gew.-% | Dichte Werkstoff [kg/m³] | Querzugs-festigkeit [N/mm²] | Wasser-aufnahme [%] | Quell-Wert [%] | Perforatorwert [mg FA/100 g] | Bekantbarkeit (Schulnote) |
|---|---|---|---|---|---|---|---|---|---|---|---|---|---|---|
| 1 | 8,5 | 7,8 | --- | --- | 100 | 92,2 | --- | --- | 650 | 0,75 | 70 | 23 | 5,0 | 2 |
| 2 | 8,5 | 7,8 | --- | --- | 100 | 92,2 | --- | --- | 550 | 0,60 | 89 | 18 | 5,1 | 4 |
| 3 | 8,5 | 7,8 | --- | --- | 100 | 92,2 | --- | --- | 510 | 0,54 | 99 | 18 | 5,0 | 6 |
| 4 | 8,5 | 7,8 | 1 | 0,91 | 100 | 91,3 | --- | --- | 570 | 0,75 | 64 | 15 | 4,8 | 3 |
| 5 | 8,5 | 7,8 | 1 | 0,91 | 100 | 91,3 | --- | --- | 550 | 0,65 | 71 | 15 | 5,0 | 4 |
| 6 | 8,5 | 7,8 | 1 | 0,91 | 100 | 91,3 | --- | --- | 490 | 0,51 | 87 | 14 | 5,0 | 6 |
| 7 | 8,5 | 7,8 | --- | --- | 90 | 83,0 | 10 | 9,2 | 560 | 0,83 | 61 | 14 | 5,1 | 2 |
| 8 | 8,5 | 7,8 | --- | --- | 90 | 83,0 | 10 | 9,2 | 520 | 0,68 | 77 | 14 | 4,9 | 2 |
| 9 | 8,5 | 7,8 | --- | --- | 90 | 83,0 | 10 | 9,2 | 480 | 0,55 | 92 | 13 | 4,8 | 3 |
| 10 | 8,5 | 7,8 | 1 | 0,91 | 90 | 92,2 | 10 | 9,2 | 560 | 1,00 | 54 | 12 | 5,0 | 1 |
| 11 | 8,5 | 7,8 | 1 | 0,91 | 90 | 92,2 | 10 | 9,2 | 520 | 0,79 | 63 | 12 | 5,1 | 2 |
| 12 | 8,5 | 7,8 | 1 | 0,91 | 90 | 92,2 | 10 | 9,2 | 470 | 0,63 | 72 | 12 | 4,8 | 2 |
| 13 | 8,5 | 7,8 | 1 | 0,91 | 95 | 86,8 | 5 | 4,6 | 570 | 0,93 | 55 | 14 | 5,1 | 2 |
| 14 | 8,5 | 7,8 | 1 | 0,91 | 95 | 86,8 | 5 | 4,6 | 510 | 0,73 | 64 | 13 | 5,0 | 2 |
| 15 | 8,5 | 7,8 | 1 | 0,91 | 95 | 86,8 | 5 | 4,6 | 470 | 0,63 | 76 | 12 | 5,1 | 3 |

**Tabelle 2): Versuche mit UF-Leim eines Molverhältnisses F : NH₂ = 0,44**

| Versuch | UF-Leim (F:NH₂ = 0,44) | UF-Leim (F:NH₂ = 0,44) | PMDI Gew.-Teile | PMDI Gew.-% | Holz Gew.-Teile | Holz Gew.-% | NeoporGew.-Teile | NeoporGew.-% | Dichte Werkstoff [kg/m³] | Querzugs-festigkeit [N/mm²] | Wasser-aufnahme [%] | Quell-Wert [%] | Perforatorwert [mg FA/100g] | Bekanbarkeit (Schul note) |
|---|---|---|---|---|---|---|---|---|---|---|---|---|---|---|
| 16 | 8,5 | 7,8 | --- | --- | 100 | 92,2 | --- | --- | 650 | 0,57 | 95 | 33 | 2,3 | 2 |
| 17 | 8,5 | 7,8 | --- | --- | 100 | 92,2 | --- | --- | 560 | 0,41 | 104 | 26 | 2,4 | 3 |
| 18 | 8,5 | 7,8 | --- | --- | 100 | 92,2 | --- | --- | 510 | 0,33 | 104 | 23 | 2,4 | 6 |
| 19 | 8,5 | 7,8 | 1 | 0,91 | 100 | 91,3 | --- | --- | 550 | 0,58 | 71 | 19 | 2,5 | 3 |
| 20 | 8,5 | 7,8 | 1 | 0,91 | 100 | 91,3 | --- | --- | 500 | 0,47 | 85 | 18 | 2,3 | 5 |
| 21 | 8,5 | 7,8 | 1 | 0,91 | 100 | 91,3 | --- | --- | 470 | 0,38 | 91 | 15 | 2,3 | 6 |
| 22 | 8,5 | 7,8 | --- | --- | 90 | 83,0 | 10 | 9,2 | 550 | 0,44 | 98 | 24 | 2,3 | 2 |
| 23 | 8,5 | 7,8 | --- | --- | 90 | 83,0 | 10 | 9,2 | 520 | 0,39 | 99 | 20 | 2,4 | 3 |
| 24 | 8,5 | 7,8 | --- | --- | 90 | 83,0 | 10 | 9,2 | 470 | 0,30 | 112 | 18 | 2,4 | 3 |
| 25 | 8,5 | 7,8 | 1 | 0,91 | 90 | 92,2 | 10 | 9,2 | 550 | 0,79 | 58 | 16 | 2,3 | 1 |
| 26 | 8,5 | 7,8 | 1 | 0,91 | 90 | 92,2 | 10 | 9,2 | 500 | 0,65 | 69 | 15 | 2,5 | 2 |
| 27 | 8,5 | 7,8 | 1 | 0,91 | 90 | 92,2 | 10 | 9,2 | 460 | 0,52 | 83 | 15 | 2,5 | 2 |
| 28 | 8,5 | 7,8 | 1 | 0,91 | 95 | 86,8 | 5 | 4,6 | 570 | 0,74 | 58 | 14 | 2,4 | 1 |
| 29 | 8,5 | 7,8 | 1 | 0,91 | 95 | 86,8 | 5 | 4,6 | 510 | 0,61 | 70 | 13 | 2,4 | 2 |
| 30 | 8,5 | 7,8 | 1 | 0,91 | 95 | 86,8 | 5 | 4,6 | 470 | 0,48 | 85 | 12 | 2,4 | 3 |

**Tabelle 3): Versuche mit UF-Leim eines Molverhältnisses F : NH₂ = 0,38**

| Versuch | UF-Leim (F:NH₂ = 0,38) | UF-Leim (F:NH₂ = 0,38) | PMDI Gew.-Teile | PMDI Gew.-% | Holz Gew.-Teile | Holz Gew.-% | Neopor Gew.-Teile | Neopor Gew.-% | Dichte Werkstoff [kg/m³] | Querzugs-festigkeit [N/mm²] | Wasser-aufnahme [%] | Quell-Wert [%] | Perforatorwert [mg FA/100 g] | Bekantbarkeit (Schul note) |
|---|---|---|---|---|---|---|---|---|---|---|---|---|---|---|
| 31 | 8,5 | 7,8 | --- | --- | 100 | 92,2 | --- | --- | 640 | 0,50 | 113 | 40 | 1,2 | 2 |
| 32 | 8,5 | 7,8 | --- | --- | 100 | 92,2 | --- | --- | 560 | 0,36 | 121 | 34 | 1,2 | 4 |
| 33 | 8,5 | 7,8 | --- | --- | 100 | 92,2 | --- | --- | 500 | 0,26 | 120 | 31 | 1,3 | 5 |
| 34 | 8,5 | 7,8 | 1 | 0,91 | 100 | 91,3 | --- | --- | 560 | 0,51 | 93 | 28 | 1,2 | 3 |
| 35 | 8,5 | 7,8 | 1 | 0,91 | 100 | 91,3 | --- | --- | 510 | 0,41 | 103 | 25 | 1,2 | 4 |
| 36 | 8,5 | 7,8 | 1 | 0,91 | 100 | 91,3 | --- | --- | 470 | 0,32 | 108 | 21 | 1,3 | 6 |
| 37 | 8,5 | 7,8 | --- | --- | 90 | 83,0 | 10 | 9,2 | 550 | 0,41 | 112 | 30 | 1,3 | 2 |
| 38 | 8,5 | 7,8 | --- | --- | 90 | 83,0 | 10 | 9,2 | 500 | 0,36 | 122 | 28 | 1,3 | 3 |
| 39 | 8,5 | 7,8 | --- | --- | 90 | 83,0 | 10 | 9,2 | 460 | 0,28 | 125 | 25 | 1,2 | 4 |
| 40 | 8,5 | 7,8 | 1 | 0,91 | 90 | 92,2 | 10 | 9,2 | 550 | 0,73 | 81 | 22 | 1,2 | 1 |
| 41 | 8,5 | 7,8 | 1 | 0,91 | 90 | 92,2 | 10 | 9,2 | 510 | 0,63 | 88 | 19 | 1,4 | 1 |
| 42 | 8,5 | 7,8 | 1 | 0,91 | 90 | 92,2 | 10 | 9,2 | 460 | 0,50 | 93 | 18 | 1,2 | 2 |
| 43 | 8,5 | 7,8 | 1 | 0,91 | 95 | 86,8 | 5 | 4,6 | 560 | 0,69 | 76 | 23 | 1,2 | 1 |
| 44 | 8,5 | 7,8 | 1 | 0,91 | 95 | 86,8 | 5 | 4,6 | 510 | 0,59 | 86 | 22 | 1,3 | 2 |
| 45 | 8,5 | 7,8 | 1 | 0,91 | 95 | 86,8 | 5 | 4,6 | 460 | 0,46 | 95 | 20 | 1,3 | 3 |

## Patentansprüche

1. Leichter holzhaltiger Stoff mit einer mittleren Dichte im Bereich von 200 bis 600 kg/m³, enthaltend, jeweils bezogen auf den holzhaltigen Stoff:
A) 30 bis 95 Gew.-% Holzpartikel;
B) 1 bis 15 Gew.-% eines Füllstoffs mit der Schüttdichte im Bereich von 10 bis 100 kg/m³, ausgewählt aus der Gruppe bestehend aus verschäumbaren Kunststoffteilchen und bereits verschäumten Kunststoffteilchen;
C) 3 bis 50 Gew.-% eines Bindemittels, enthaltend ein Aminoplastharz und ein organisches Isocyanat mit mindestens zwei Isocyanatgruppen und gegebenenfalls
D) Additive.

2. Leichter holzhaltiger Stoff gemäß Anspruch 1, wobei die Komponente B) ausgewählt wird aus der Gruppe bestehend aus Styrolhomopolymerisat, Styrolcopolymerisat, C₂- bis C₁₀-Olefinhomoplymerisat, Copolymerisaten aus C₂- bis C₁₀-Olefinen, PVC (hart und weich), Polycarbonate, Polyisocyanurate, Polycarbodiimide, Polyacrylimide, Polymethacrylimide, Polyamide, Polyester, Polyurethane, Aminoplastharze und Phenolharze.

3. Leichter holzhaltiger Stoff gemäß Anspruch 1 oder 2, wobei die Komponente B) ausgewählt ist aus der Gruppe bestehend aus Styrolhomopolymerisat und Styrolcopolymerisat.

4. Leichter holzhaltiger Stoff gemäß Anspruch 1 bis 3, wobei das organische Isocyanat der Komponente C) PMDI ist.

5. Leichter holzhaltiger Stoffgemäß Anspruch 1 bis 4, wobei das Aminoplastharz ausgewählt wird aus der Gruppe bestehend aus Harnstoff-Formaldehyd-Harz, Melamin-Formaldehydharz, Melamin-Harnstoff-Formaldehydharz.

6. Leichter holzhaltiger Stoff gemäß Anspruch 1 bis 5 wobei das molare Formaldhyd : -NH₂-Gruppen-Verhältnis im Bereich von 0,3 bis 1,0 liegt.

7. Leichter holzhaltiger Stoff gemäß Anspruch 1 bis 6, wobei der Gehalt des Aminoplastharzes in der Komponente C), bezogen auf den leichten holzhaltigen Stoff, im Bereich von 1 bis 45 Gew.-% und der Gesamtgehalt des organischen Isocyanats in der Komponente C), bezogen auf den leichten holzhaltigen Stoff, im Bereich von 0,1 bis 5 Gew.-% liegt.

8. Mehrschichtiger Holzwerkstoff, der mindestens drei Schichten enthält, wobei nur die mittlere Schicht oder mindestens ein Teil der mittleren Schichten einen leichten holzhaltigen Stoff gemäß der Ansprüche 1 bis 7 enthält.

9. Mehrschichtiger Holzwerkstoff, der mindestens drei Schichten enthält, wobei nur die mittlere Schicht oder mindestens ein Teil der mittleren Schichten einen leichten holzhaltigen Stoff gemäß der Ansprüche 1 bis 7 enthält und die äußeren Deckschichten keinen Füllstoff enthalten.

10. Mehrschichtiger Holzwerkstoff nach den Ansprüchen 8 und 9 mit einer mittleren Dichte im Bereich von 300 kg/m³ bis 600 kg/m³.

11. Verfahren zur Herstellung von leichten holzhaltigen Stoffen wie in Anspruch 1 bis 7 definiert, in welchem man
A) 30 bis 95 Gew.-% Holzpartikel;
B) 1 bis 15 Gew.-% eines Füllstoffs mit der Schüttdichte im Bereich von 10 bis 100 kg/m³, ausgewählt aus der Gruppe bestehend aus verschäumbaren Kunststoffteilchen und bereits verschäumten Kunststoffteilchen;
C) 3 bis 50 Gew.-% eines Bindemittels, enthaltend ein Aminoplastharz und ein organisches Isocyanat mit mindestens zwei Isocyanatgruppen und gegebenenfalls
D) Additive
mischt und anschließend unter erhöhter Temperatur und unter erhöhtem Druck verpresst.

12. Verfahren zur Herstellung eines mehrschichtigen Holzwerkstoffes wie in den Ansprüchen 8 bis 10 definiert, wobei man die Komponenten für die einzelnen Schichten übereinanderschichtet und unter erhöhter Temperatur und erhöhtem Druck verpresst.

13. Verwendung der leichten holzhaltigen Stoffe, definiert in den Ansprüchen 1 bis 7, oder des mehrschichtigen Holzwerkstoffs, definiert in den Ansprüchen 8 bis 10, zur Herstellung von Gegenständen aller Art und im Baubereich.

14. Verwendung des leichten holzhaltigen Stoffes, definiert in den Ansprüchen 1 bis 7 oder des mehrschichtigen Holzwerkstoffs, definiert in den Ansprüchen 8 bis 10, zur Herstellung von Möbeln und Möbelteilen, von Verpackungsmaterialien, im Hausbau oder im Innenausbau.

15. Verwendung eines Bindemittels, enthaltend ein Aminoplastharz und ein organisches Isocyanat mit mindestens zwei Isocyanatgruppen, wobei das molare Formaldhyd : -NH₂-Gruppen-Verhältnis im Bereich von 0,3 bis 1,0 liegt, zur Herstellung von leichten holzhaltigen Stoffen oder von mehrschichtigen Holzwerkstoffen mit einer Dichte im Bereich von 200 bis 600 kg/m³.

16. Verwendung eines Bindemittels, enthaltend ein Aminoplastharz und ein organisches Isocyanat mit mindestens zwei Isocyanatgruppen, wobei das molare Formaldhyd : -NH₂-Gruppen-Verhältnis im Bereich von 0,3 bis 1,0 liegt, zur Herstellung von leichten holzhaltigen Stoffen oder leichten mehrschichtigen Holzwerkstoffen, wie in den Ansprüchen 1 bis 10 definiert.
